(19) **Europäisches Patentamt**

**European Patent Office**

**Office européen des brevets**

(11) **EP 0 877 893 B1**

(12) **EUROPEAN PATENT SPECIFICATION**

(45) Date of publication and mention
of the grant of the patent:
**19.09.2001 Bulletin 2001/38**

(21) Application number: **97905745.2**

(22) Date of filing: **30.01.1997**

(51) Int Cl.⁷: **F16L 59/02**, B64G 1/58

(86) International application number:
**PCT/US97/01763**

(87) International publication number:
**WO 97/28399 (07.08.1997 Gazette 1997/34)**

(54) **THREE-DIMENSIONALLY REINFORCED ABLATIVE/INSULATIVE COMPOSITE**

DREIDIMENSIONALVERSTÄRKTER ABLATIVER/DÄMMENDER VERBUNDWERKSTOFF

COMPOSITE ABLATIF-ISOLANT RENFORCE SUIVANT TROIS DIMENSIONS

(84) Designated Contracting States:
**DE FR GB IT**

(30) Priority: **30.01.1996 US 594270**

(43) Date of publication of application:
**18.11.1998 Bulletin 1998/47**

(73) Proprietor: **Textron Systems Corporation
Wilmington, Massachusetts 01887-2941 (US)**

(72) Inventors:
• **DOUCETTE, Jean, J., Jr.
Boxford, MA 01921 (US)**
• **FRANCHITTO, Anthony, R.
Natick, MA (US)**

(74) Representative:
**Luckhurst, Anthony Henry William et al
MARKS & CLERK,
57-60 Lincoln's Inn Fields
London WC2A 3LS (GB)**

(56) References cited:
FR-A- 2 625 793          US-A- 4 063 684
US-A- 4 567 076          US-A- 4 655 866
US-A- 5 310 592

**Description**

High performance re-entry vehicles and interceptor missiles will experience heating under conditions that challenge the ablation and/or insulation capabilities of conventional thermal protection materials applied thereto. These conditions include short-term exposure of the thermal protection materials, during ballistic ascent or re-entry through the atmosphere, to very high temperatures which will ablate any known material. These conditions also include long-term exposure to relatively lower heat flux levels, while gliding in the atmosphere, which can produce elevated temperatures deep inside the thermal protection material, thereby diminishing its insulative properties.

Typically, thermal protection materials employed for high performance ballistic re-entry (e.g., tape wrapped carbon phenolic and silica phenolic fabric composites) perform well under ablation but have insulation capabilities that are not sufficient to protect against overheating after long periods of thermal soak unless an excessive mass of insulating material is utilized.

Previously, the insulation capability of high density composite fabric ablative layers has been improved by superimposing and bonding a plurality of such layers by use of adhesives, stitching, and/or reinforcing elements or fasteners. However, the weight of high density ablative outer layers, needed to provide sufficient insulation, has typically been excessive, thereby resulting in reduced mission range and/or payload to accommodate this added weight.

Alternately, low density, lightweight resin foam or honeycomb have been used as an inner insulating layer, which is laminated to an outer composite fabric heat shield layer, by resin bonding, to provide suitable ablative and insulative protection at lower weights. However, many of these laminates have experienced delamination under adverse thermal conditions as could be experienced during the flight profile.

Therefore, a need exists for an ablative/insulative composite, having sufficient thermal protection capabilities, wherein the composite is lighter weight and will not fail (e. g., delaminata) during use.

US-A-4 567 076 shows an insulating structure in which a blanket is formed by stitching together a flame projective ceramic fabric, an insulating layer and a fibre reinforced matrix material. A second layer of reinforced matrix material is provided with the blanket, to integrate it with the first layer.

The present invention as defined in claim 1 provides a three-dimensionally reinforced ablative/insulative composite that includes a high density fabric-based ablative layer and a low density resin-based insulative layer that is chemically bound to the ablative layer. This composite further includes stitches of a temperature-resistant thread which extend through the ablative layer and form reinforcing loops within the insulative layer. These loops are preferably chemically and mechanically bound to the insulative layer.

This invention has the advantage that it is a lightweight material which is suitable for use as a heat shield against ablative heating during ballistic flight and thermal soak heating during non-ballistic flight. This invention also has the advantage that the bond, between the ablative layer and the insulative layer, has been multi-directionally reinforced to reduce the likelihood of separation of the layers.

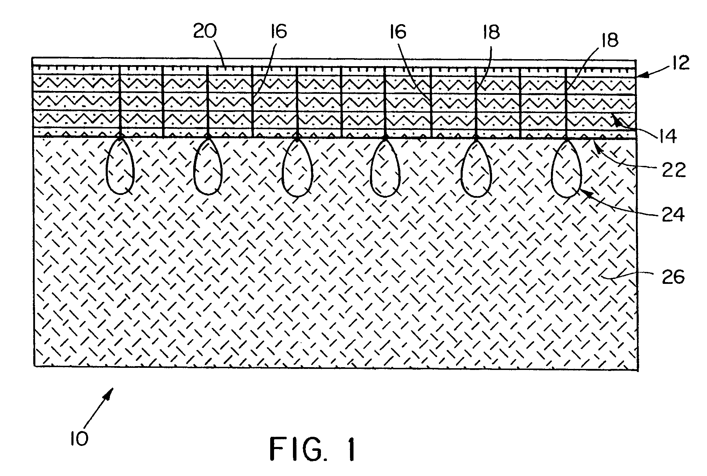

Fig. 1 is a view of a section of one embodiment of the 3-D reinforced ablative/insulative composite of the present invention, particularly illustrating the stitched reinforcement

loops, of thermally-resistant thread, that reinforce the binding of the ablative layer to the insulating layer.

In Fig. 1 the 3-D reinforced ablative/insulative composite 10 comprises a fabric-based ablative layer 12. A fabric-based ablative layer, as defined herein, comprises one or more layers of a fabric, or fabrics, having a material-dependent ablation resistance (dependent upon the heat of vaporization of the material and the material density) and a total thickness that will typically prevent significant thermal damage to a vehicle or missile due to ablation during ballistic (e.g., missile ascent or vehicle re-entry) or non-ballistic (e.g., gliding) passage through the atmosphere. The ablation resistance of ablative layer 12 is measured in terms of thickness loss or weight loss from ablative layer 12. Preferably, ablative layer 12 will be entirely consumed during ballistic ascent or re-entry without damage to the base structure (e.g. vehicle or missile). Examples of fabrics, having a heat of vaporization suitable for the present invention, include carbon fabrics and silicon-containing fabrics.

The fabric can be woven, knit or non-woven. Preferably, the fabric will have a higher fiber density, and thus a higher material density, such as occurs in a woven fabric. More preferably, the fabric has a satin weave.

To further increase the material density, the fabric is impregnated, or contains at least one non-fiber, ablation-resistant material that is compatible with the fabric material. Examples of such materials include carbon or cured resins, for instance phenolic, silicone, epoxy or polyimide.

For example, it is preferred that the carbon fabric be impregnated with cured phenolic resin, as is described in Example 1, and that silicon-containing fabric be impregnated with cured silicone resin.

In a more preferred embodiment, wherein ablative layer 12 contains a carbon fabric preform, the preform further contains amorphous and/or graphite carbon that was deposited therein, on the fabric fibers and/or in the fabric pores by carbon deposition and densification means known in the art. Examples of such means include the deposition of graphitic carbon by thermally breaking down a hydrocarbon within the preform to deposit graphite therein, using a gaseous or liquid hydrocarbon, such as by chemical vapor infiltration and deposition. Examples of suitable means of carbon densification in a carbon fabric preform are further described in U.S. Patent No.s 4,472,454 issued to Houdayer et al., 5,348,774 issued to Golecki et al., and 5,389,152 issued to Thurston et al.

Alternatively, the carbon fabric preform can be impregnated with a charrable resin (e.g., epoxy or phenolic resin) which is then charred to form amorphous and/or graphitic carbon within the preform.

Ablative layer 14 should have a high density, usually about 1.25 g/cc or higher, for carbon fabric-based ablative layers, preferably 1.35 g/cc or higher. For silicon-based ablative layers, the density of ablative layer 14 is usually about 1.5 g/cc or higher.

Typically, ablation resistance can be further improved by increasing the total fabric thickness within the ablative layer. However, increasing ablation resistance, by increasing total fabric thickness, must be balanced against the increased weight that would be added to the missile or vehicle. In a preferred embodiment, to increase the fabric thickness in the ablative layer, multiple layers of fabric 14 are bonded, laminated or otherwise fastened together to make a fabric stack or preform used in ablative layer 12. It is more preferred that fabric layers 14 be stitched together with a temperature-resistant thread 16 that will not significantly degrade when heated to the design temperature for the composite (i.e., to about 2,750°C (5000°F) about for ballistic passage protection or to about 1,100°C (2000°F) for non-ballistic passage protection). Examples of suitable temperature resistant threads include carbon and silicon-based thread. Most preferably, fabric layers 14 are lock stitched as is described in Example 1.

Fabric layers 14 are stitched with a number of stitches per square inch of surface area sufficient to hold fabric layers 14 together and to provide pathways, along the stitch, for the escape of decomposition products that are generated upon exposure of ablative layer 12 to high temperatures, such as ablation temperatures. Otherwise, decomposition gas buildup between fabric layers 14 could result in spallation of the impregnated fabric composite. Typically, fabric layers 14 are lock stitched together with at least nine stitches per square inch of surface area and more preferably at least sixteen stitches per square inch. Most preferably, the stitches of thread 16 are uniformly spaced.

For suitable ablative protection under ballistic conditions, carbon fabric is preferred for the ablative layer as carbon fabric provides a very high degree of ablative protection per unit of fabric weight. The carbon fabric should have a carbon content that prevents significant thermal degradation of the fabric when exposed to ablative temperatures between about 2,200°C to 2,750°C (4000°F to 5000°F). Typically, the carbon content is about 90%, by weight, or more. More preferably, the carbon content is about 92%, by weight, or more.

Typically, the total fabric thickness of the carbon fabric, for ablative protection, is between about 0.25 mm to 25 mm (0.01 inches and 1.0 inches). Preferably, the total thickness is about 1.3 mm (0.05 inches) or more. Most preferably, for ballistic ablative protection, the total fabric thickness is between about 7.5 mm (0.3 inches) and about 15 mm (0.6 inches).

Further description of a carbon-fabric, ballistic composite is provided in Example 1.

For suitable thermal protection under non-ballistic thermal heat soak conditions, a silicon-containing fabric, such as quartz fabric, silicon nitride fabric, or silicon carbide fabric is preferred for the ablative layer material. Typically, the total fabric thickness of the silicon-containing fabric is between about 1.3 mm (0.05 inches) to about 25 mm (1.0 inch) thick, and preferably between about 6 mm (0.25 inches) and about 19 mm (0.75 inches) thick. Further description of a quartz fabric, non-ballistic composite is provided in Example 2.

The composite also comprises a plurality of stitches 18 of temperature-resistant thread which extend from outer surface 20 of ablative layer 12, through inner surface 22 of ablative layer 12, to form reinforcing loops 24 outside inner surface 22.

The purpose of reinforcing loops 24 is to provide a plurality of anchor points which are bound, chemically and/or mechanically, to resin-based insulative layer 26 thereby providing a three-dimensional reinforcement of the binding of ablative layer 12 to insulative layer 26.

Preferably, reinforcing loops 24 also contain a cured thermosetting resin that is compatible with and chemically bound to the cured resin contained in the insulative layer. The number of reinforcing loops 24 provided must be sufficient to generally prevent separation of ablative layer 12 from insulative layer 26 while under ballistic ablative conditions. This number is also dependent upon the length of reinforcing loop 24 disposed within insulative layer 24. Typically, the composite should contain at least nine stitches 18 and reinforcing loops 24 per square inch of surface area, wherein reinforcing loops 24 are at least 1.3 mm (0.05 inches) long. More preferably, the composite contains at least sixteen stitches 18 and reinforcing loops 24 per square inch. Also, it is preferred that reinforcing loops 24 are uniformly spaced within the composite.

For manned re-entry vehicles, it is more preferred that the length of reinforcing loops 24 be about 13 mm (0.5 inches) long, or more.

Selection of a thread suitable to form stitches 18 and reinforcing loops 24, is dependent upon the ability of the thread to form stitches without breaking. The ability to form stitches is a function of the bend radius of the thread, bend radius (R) being defined by the equation:

$$R = E \times D / 2\sigma$$

wherein E is the tensile modulus of the thread, D is the filament diameter and σ is the filament tensile strength. To be used for stitching, it is preferred that the bend radius be about 0.13 mm (0.005 inches) or less.

In addition to having a suitable bend radius, the thread must also have a filament tensile strength sufficient to usually survive the stitching operation without breaking. Preferably, the filament tensile strength should be about 600 ksi or greater.

Carbon thread is the preferred thread for use in forming stitches 18 and reinforcing loops 24 when ablative layer 14 is carbon-fabric based. The carbon content of the thread must be sufficient to provide dimensional stability (i.e., prevent significant separation of ablative layer 12 and insulative layer 24) and maintain thread strength at ablative temperatures without material failure. Typically, the carbon content of the thread is about 85 wt.% or more while preferably, the carbon content is about 92 wt.% or more. One suitable embodiment of reinforcing loops 24 is discussed in Example 1.

Wherein ablative layer 14 is silicon-fabric based, a silicon-containing thread is preferred, such as silicon nitride, silicon carbide or quartz thread.

Composite 12 further comprises insulative layer 26, which is disposed against inner surface of ablative layer 14 and around reinforcing loops 24. Insulative layer 26 is mechanically and/or chemically bound to both ablative layer 14 and reinforcing loops 24. Preferably, insulative layer 26 is both mechanically and chemically bound to reinforcing loops 24, as described in the Example 1.

Insulative layer 26, as defined herein, is a resin-based thermal insulation, with a density that is low enough to provide, at low weight, a suitable degree of insulation to thereby insulate the vehicle during ablation and/or heat soak conditions, and also is high enough to have a strength that will usually prevent material failure of the insulator. Preferably, the density is between about 0.2 to 0.3 grams/cc.

The low density insulation employed may be of the type conventionally used as pre-formed insulating layers in the space field. Suitable resins include, for example, phenolics, silicones, polyurethanes and epoxies which preferably bond, when curing, with the adjacent ablative layer 12 and reinforcing loops 24 to provide stronger bonding between ablative layer 14 and insulative layer 26. Suitable amounts of resin-curing agents are included when required to cure the resin system.

In the embodiment wherein ablative layer 14 is formed from carbon fabric, the preferred resin for insulative layer 26 is a phenolic resin, and is more preferably a rubberized phenolic resin, as described in Example 1.

More preferably, insulative layer 26 also contains low density fillers, such as carbon microballoons, phenolic microballoons or glass microballoons, for reducing the density of the insulation while also improving the insulative capability of insulative layer 26.

Most preferably, insulative layer 26 further includes fibers, having high melting points, to improve the strength of the layer material, thus permitting he use of lower density insulation with improved insulation capability. Suitable fibers include, for example, carbon fibers, ceramic fibers and silica-based fibers as described in Example 1. Preferably, the length of the fiber is a couple inches (inch = 2,54 cm) or less.

Insulative layer 26 is a rigid layer which is molded or machined to conform to the shape of the surface of the space vehicle or missile to which it is to be bonded.

The invention will now be further, and specifically described by the following examples.

Example 1

3-D Reinforced Ablative/Insulative Composite for Ballistic Heating Conditions

A 3-D reinforced ablative/insulative composite, that functions primarily as a heat shield during ballistic atmospheric re-entry profiles or to thermally protect interceptor missiles during ascent, was made from a carbon fabric ablative layer, an insulative layer of a fiber-reinforced phenolic syntactic foam, and carbon thread-based reinforcement.

The ablative layer was made from a carbon preform layer. To make the carbon preform layer, eight layers of 90% carbonized polyacrylonitrile (PAN) satin weave fabric (0.0093 inches thick with 7.5 threads per cm. by 7.5 threads per cm. (19 threads per inch by 19 threads per inch); T300-3K fabric purchased from Amoco) were stacked and then stitched tightly together. The stitches used were lock stitches made with 3-ply 1320 denier carbon thread (tensile modulus of $3 \times 10^{11}$ Nm$^{-2}$ (43 million psi) and tensile strength of greater than 700 ksi) as both top and bobbin (bottom) threads.

The carbon thread was formed from 92% carbonized PAN filaments (#43 carbon filament having a diameter of 4.5 microns, purchased from Courtaulds). The filaments were stretch broken and then spun into the 3-ply thread (can be spun by S.A. Schappe, St. Rembert, France).

The lock stitching was performed using a Singer Class 11 industrial sewing machine. Alternately, a singer Class 7 industrial sewing machine could also be used. The stitches were in rows (3.1 stitches per cm.) (8 stitches per inch) spaced about 8 mm (0.30 inches) apart.

The carbon thread reinforcement was then inserted through the carbon preform layer. To add the reinforcement, the preform layer was placed upon a spacer layer and then the layers were lock stitched together, by a Singer Class 11 industrial sewing machine, again using the 3-ply 1320 denier carbon thread. These reinforcement lock stitches ran from the top of the preform layer, through the preform and spacer layers, and then interlocked with the bottom thread at the underside of the spacer layer. The stitches were made in rows (2.4 stitches per cm.) (6 stitches per inch) which were parallel to and equidistantly spaced between the rows of lock stitches used to form the carbon fabric preform layer.

The spacer layer was made from 3 layers of 4.75 mm (3/16 inch) thick low density polypropylene foam which was placed on top of a bottom layer of cardboard.

After inserting the reinforcement lock stitches, the cardboard part of the spacer layer was removed from the underside of the preform layer. Removing the cardboard also caused the bottom thread, of the reinforcement lock stitches, to be separated from these stitches, thus forming thread loops emerging from the bottom of the preform layer.

The loops were then made rigid by saturating the loops with a phenolic resin and subsequently partially curing the resin. Specifically, phenolic resin (SC1008, Borden Chemical) was applied (e.g., by brushing) to the ends of the loops to saturate the loops. The three polypropylene foam layers of the spacer layer were then removed from the preform layer and the loops were rigidized by heating in an air circulating oven at 120°C (250°F) for about 5 minutes to B-stage (partially cure) the phenolic resin, thereby forming reinforcement loops.

A fiber-reinforced, phenolic syntactic foam insulative layer was then formed, in place, around the reinforcement loops and against the underside of the preform layer. First, 211 grams of phenolic microballoons (No. 0930 purchased from Union Carbide) were dry mixed, using compressed air, with 35 grams of 3 mm (1/8 inch) long chopped quartz fiber (JPS Glass Fabrics) to form a substantially homogeneous dry mixture. This dry mixture was then combined with 50 grams of 5% rubber-modified phenolic resin and 60 grams methanol was added, as a solvent, to make a workable phenolic mixture or wet blend.

The 5% rubber-modified phenolic resin was made by mixing suitable amounts of 1008 phenolic resin and rubber modified phenolic resin (Schenectady Chemicals Type HRJ-1387, acrylonitrile butadiene rubber). The rubber-modification made the insulative layer less friable and tougher.

The phenolic mixture was then trowelled onto the reinforcement loops and the preform layer surface to form an uncured phenolic layer. The uncured phenolic layer was subsequently cured in a vacuum bag, under about 1 x $10^5$ Nm$^{-2}$ (14 psi) vacuum, while being heated in an oven at about 175°C (350°F) for about 8 hours, thereby forming the fiber-reinforced, phenolic syntactic foam insulator layer. During the curing process, which is a condensation reaction for phenolic resin, the syntactic foam is consolidated to the inner surface of the carbon preform and around the carbon loops. Thus, the insulator layer becomes more dense, and level on its exposed surface, as reaction products, methanol and gas bubbles are removed from the phenolic layer, and from between the preform layer and the phenolic layer, by the vacuum being pulled.

After curing, the insulator layer was machined to a desired thickness.

Subsequently, the ablative layer was formed from the carbon preform layer by saturating the preform layer with a phenolic resin (SC1008), B-staging the resin and then by compression molding to further consolidate the fabric in the preform layer to form a high density ablative layer and to chemically bond the ablative layer to the insulator layer.

The compression molding was performed in a hydraulic press by placing a heated platen against the preform layer and a water-cooled platen, against the insulator and then by pressing the platens together in a press to approximately 13,79 N.m$^{-2}$ (200 psi) to form a 3-D reinforced ablative/insulative composite. The water-cooled platen was cooled to minimize degradation of the insulative layer.

Analysis of the composite found that the ablative layer had a high density of about 1.37 grams/cc and a fiber volume of about 60%, while the density of the insulator layer was about 0.23 grams/cc.

An evaluation of the area of the composite containing the reinforcement loops, conducted by sectioning and microscopic examination, found that the loops were well embedded mechanically in the foam insulator and was also chemical bonded into the foam microstructure as the previously partially curved (B-Stage) resin in the loops had bonded to the resin in the phenolic layer at the loop/syntactic foam interface when the insulative layer was cured.

Example 2

3-D Reinforced Ablative/Insulative Composite for Thermal Soak Conditions

A composite for use under long-term thermal soak conditions, such as experienced during atmospheric gliding, was fabricated by the method described in Example 1. However, the ablative layer was formed using 10 layers of quartz fabric (style No. 581, JPS glass Fabrics) which were lock stitched together using quartz sewing thread (continuous filament 300-2/8 thread from Quartz Products Inc.) this stitching, had stitching rows of 8 stitches per inch with the rows spaced 6 mm (0.25 inches) apart.

The stitching to form the reinforcement loops had the same stitch pattern. The loops were rigidized with a rigid silicone resin (glass resin type GR908F, Owens-Illinois).

The composition of the insulative foam layer was 60% silicon microballoons (Grace Syntactics), 7% 3 mm (1/8 inch) chopped quartz fiber and 33% RTV silicone elastomer.

**Claims**

1. A three-dimensional reinforced ablative/insulative composite, comprising:

   a high density fabric-based ablative layer (12);
   a plurality of stitches (18) of a temperature-resistant thread, wherein
   said stitches extend through the ablative layer (12), **characterised in that** said stitches (18) form reinforcing loops (24) outside an inner surface (22) of the ablative layer (12); and
   a low density resin-based insulative layer (26) bound to the inner surface (22) of the ablative layer (12), with said loops (24) being completely embedded in said low density resin-based insulative layer (26), thereby providing a three-dimensional reinforcement of the binding of said ablative layer (12) to said insulative layer (26).

2. A composite of Claim 1, **characterised in that** the fabric-based ablative layer (12) comprises

   multiple layers of fabric (14) disposed in a stack;
   means for binding the fabric layers (14) together to form a fabric preform; and
   a non-fiber ablative material disposed within the fabric preform.

3. A composite of Claim 2, **characterised in that** the binding means comprises a plurality of lock stitches made with a second temperature-resistant thread (16).

4. A composite of Claim 2 or 3, **characterised in that** the fabric preform comprises multiple layers (14) of carbon fabric.

5. A composite of Claim 4, **characterised in that** the non-fiber ablative material, disposed in the preform, further comprises a cured carbon-containing resin.

6. A composite of Claim 5, **characterised in that** the cured carbon-containing resin comprises a phenolic resin.

7. A composite of Claim 4, **characterised in that** the non-fiber ablative material, disposed in the preform, is carbon.

8. A composite of Claim 3, **characterised in that** the second temperature resistant thread (16) is a carbon thread.

9. A composite of Claim 1 **characterised in that** temperature-resistant thread (18) is selected from the group consisting essentially of carbon thread, quartz thread, silicon nitride thread and silicon carbide thread.

10. A composite of Claim 1, **characterised in that** the insulative layer (26) comprises:

    a cured resin; and
    microballoons.

11. A composite of Claim 10, **characterised in that** the cured resin is selected from the group consisting essentially of phenolic, rubberized phenolic, silicon, epoxy and polyimide resins.

12. A composite of Claim 10 or 11 **characterised in that** the microballoons are selected from the group consisting essentially of phenolic, carbon and glass microballoons.

13. A composite of Claim 10, 11 or 12, **characterised by** further comprising high temperature fibers.

14. A composite of Claim 13, **characterised in that** the high temperature fiber is selected from the group consisting essentially of carbon, ceramic and silica fibers.

15. A composite of Claim 1, for thermal protection from ablation, **characterised in that**:

    the high density ablative layer (12) containing multiple layers of carbon fabric (14), said fabric containing a cured phenolic resin;
    said stitches which extend through the ablative layer and form reinforcing loops (24) outside an inner surface (22) of the ablative layer (12) are of carbon thread; and
    the low density insulative layer (26) comprises a syntactic rubberized phenolic foam which contains microballoons and high temperature fibers.

16. A composite of Claim 1, for thermal protection under heat soak conditions, **characterised in that**:

    the high density ablative layer (12) contains multiple layers of quartz fabric (14), said fabric containing a cured silicone resin;
    said stitches which extend through the ablative layer and form reinforcing loops outside an inner surface (22) of the ablative layer (12) are of quartz thread; and
    the low density insulative layer (26) comprises a syntactic silicone foam which contains microballoons and high temperature fibers.

**17.** A method of forming a three-dimensional reinforced ablative/insulative composite, comprising the steps of

forming a high density fabric-based ablative layer (12); stitching a plurality of stitches (18) of a temperature-resistant thread through the ablative layer (12), the stitches forming reinforcing loops (24) which extend outside an inner surface (22) of the ablative layer (12), and forming a low density resin-based insulative layer (26) on said inner surface (22) of the ablative layer and completely embed said loops (12), in said low density resin-based insulative layer (26), which is bound to the inner surface (22) of the ablative layer (12) thus providing a three-dimensional reinforcement of the binding of said ablative layer (12) to said insulative layer (26).

**Patentansprüche**

**1.** Dreidimensionaler verstärkter ablativer/dämmender Verbundwerkstoff, der aufweist:

eine ablative Schicht (12) auf Stoffbasis mit hoher Dichte;

eine Vielzahl von Stichen (18) eines temperaturbeständigen Fadens, worin sich die Stiche durch die ablative Schicht (12) hindurch erstrecken, **dadurch gekennzeichnet, daß** die Stiche (18) Verstärkungsschlaufen (24) außerhalb einer Innenfläche (22) der ablativen Schicht (12) bilden; und

eine dämmende Schicht (26) auf Harzbasis mit niedriger Dichte, die an die Innenfläche (22) der ablativen Schicht (12) gebunden ist, wobei die Schlaufen (24) vollständig in der dämmenden Schicht (26) auf Harzbasis mit niedriger Dichte eingebettet sind, wodurch eine dreidimensionale Verstärkung der Bindung der ablativen Schicht (12) an die dämmende Schicht (26) bewirkt wird.

**2.** Verbundwerkstoff nach Anspruch 1, **dadurch gekennzeichnet, daß** die ablative Schicht (12) auf Stoffbasis aufweist:

mehrere Stoffschichten (14), die in einem Stapel angeordnet sind; ein Hilfsmittel für das Verbinden der Stoffschichten (14) miteinander, um ein Stoffvorformprodukt zu bilden; und ein ablatives Material auf Nichtfaserbasis, das innerhalb des Stoffvorformproduktes angeordnet ist.

**3.** Verbundwerkstoff nach Anspruch 2, **dadurch gekennzeichnet, daß** das Hilfsmittel für das Verbinden eine Vielzahl von Steppstichen aufweist, die mit einem zweiten temperaturbeständigen Faden (16) vorgenommen wurden.

**4.** Verbundwerkstoff nach Anspruch 2 oder 3, **dadurch gekennzeichnet, daß** das Stoffvorformprodukt mehrere Schichten (14) eines Stoffes aus Kohlenstoffasern aufweist.

**5.** Verbundwerkstoff nach Anspruch 4, **dadurch gekennzeichnet, daß** das ablative Material auf Nichtfaserbasis, das im Vorformprodukt angeordnet ist, außerdem ein ausgehärtetes kohlenstoffhaltiges Harz aufweist.

**6.** Verbundwerkstoff nach Anspruch 5, **dadurch gekennzeichnet, daß** das ausgehärtete kohlenstoffhaltige Harz ein Phenolharz aufweist.

**7.** Verbundwerkstoff nach Anspruch 4, **dadurch gekennzeichnet, daß** das ablative Material auf Nichtfaserbasis, das im Vorformprodukt angeordnet ist, Kohlenstoff ist.

**8.** Verbundwerkstoff nach Anspruch 3, **dadurch gekennzeichnet, daß** der zweite temperaturbeständige Faden (16) ein Kohlenstoffaden ist.

**9.** Verbundwerkstoff nach Anspruch 1, **dadurch gekennzeichnet, daß** der temperaturbeständige Faden (18) aus der Gruppe ausgewählt wird, die im wesentlichen besteht aus: Kohlenstoffaden; Quarzfaden; Siliciumnitridfaden; und Siliciumkarbidfaden.

**10.** Verbundwerkstoff nach Anspruch 1, **dadurch gekennzeichnet, daß** die dämmende Schicht (26) aufweist:

ein ausgehärtetes Harz; und Mikroballons.

**11.** Verbundwerkstoff nach Anspruch 10, **dadurch gekennzeichnet, daß** das ausgehärtete Harz aus der Gruppe ausgewählt wird, die im wesentlichen besteht aus: Phenolharz; gummiertes Phenolharz; Silikonharz; Epoxidharz; und Polyimidharz.

**12.** Verbundwerkstoff nach Anspruch 10 oder 11, **dadurch gekennzeichnet, daß** die Mikroballons aus der Gruppe ausgewählt werden, die im wesentlichen besteht aus: Phenolmikroballons; Kohlenstoffmikroballons; und Glasmikroballons.

**13.** Verbundwerkstoff nach Anspruch 10, 11 oder 12, **dadurch gekennzeichnet, daß** er außerdem Hochtemperaturfasern aufweist.

**14.** Verbundwerkstoff nach Anspruch 13, **dadurch gekennzeichnet, daß** die Hochtemperaturfaser aus der Gruppe ausgewählt wird, die im wesentlichen besteht aus: Kohlenstoffasern; keramische Fasern; und Siliciumdioxidfasern.

**15.** Verbundwerkstoff nach Anspruch 1 für einen Wärmeschutz vor Ablation, **dadurch gekennzeichnet, daß**:

die ablative Schicht (12) mit hoher Dichte mehrere Schichten des Stoffes (14) aus Kohlenstoffasern enthält, wobei der Stoff ein ausgehärtetes Phenolharz enthält;

die Stiche, die sich durch die ablative Schicht hindurch erstrecken und Verstärkungsschlaufen (24) außerhalb einer Innenfläche (22) der ablativen Schicht (12) bilden, aus einem Kohlenstoffaden sind; und

die dämmende Schicht (26) mit niedriger Dichte einen syntaktischen gummierten Phenolschaumstoff aufweist, der Mikroballons und Hochtemperaturfasern enthält.

**16.** Verbundwerkstoff nach Anspruch 1 für einen Wärmeschutz unter Erwärmungsbedingungen, **dadurch gekennzeichnet, daß**:

die ablative Schicht (12) mit hoher Dichte mehrere Schichten des Quarzstoffes (14) enthält, wobei der Stoff ein ausgehärtetes Silikonharz enthält;

die Stiche, die sich durch die ablative Schicht hindurch erstrecken und Verstärkungsschlaufen außerhalb einer Innenfläche (22) der ablativen Schicht (12) bilden, aus einem Quarzfaden sind; und

die dämmende Schicht (26) mit niedriger Dichte einen syntaktischen Silikonschaumstoff aufweist, der Mikroballons und Hochtemperaturfasern enthält.

**17.** Verfahren zur Herstellung eines dreidimensionalen verstärkten ablativen/dämmenden Verbundwerkstoff, das die folgenden Schritte aufweist:

Bilden einer ablativen Schicht (12) auf Stoffbasis mit hoher Dichte;

Nähen einer Vielzahl von Stichen (18) eines temperaturbeständigen Fadens durch die ablative Schicht (12) hindurch, wobei die Stiche Verstärkungsschlaufen (24) bilden, die sich außerhalb einer Innenfläche (22) der ablativen Schicht (12) erstrekken; und Bilden einer dämmenden Schicht (26) auf Harzbasis mit niedriger Dichte auf der Innenfläche (22) der ablativen Schicht und vollständiges Einbetten der Schlaufen (24) in der dämmenden Schicht (26) auf Harzbasis mit niedriger Dichte, die an die Innenfläche (22) der ablativen Schicht (12) gebunden ist, wodurch eine dreidimensionale Verstärkung der Bindung der ablativen Schicht (12) an die dämmende Schicht (26) bewirkt wird.

## Revendications

**1.** Composite couche ablative/couche isolante renforcé suivant trois dimensions comprenant:

une couche ablative à base de toile à haute densité (12);

une pluralité de points (18) d'un fil résistant à la température, dans lequel

lesdits points s'étendent à travers la couche ablative (12), **caractérisé en ce que** lesdits points (18) forment des boucles de renforcement (24) à l'extérieur d'une surface interne (22) de la couche ablative (12); et

une couche isolante à base de résine à faible densité (26) liée à la surface interne (22) de la couche ablative (12), lesdites boucles (24) étant complètement noyées dans ladite couche isolante à base de résine à faible densité (26), produisant ainsi un renforcement tridimensionnel de la liaison de ladite couche ablative (12) à ladite couche isolante (26).

**2.** Composite selon la revendication 1, **caractérisé en ce que** la couche ablative à base de toile (12) comprend

de multiples couches de toile (14) empilées;

un moyen destiné à lier les unes aux autres les couches de toile (14) de façon à former une préforme en toile; et

un matériau ablatif non fibreux disposé dans la préforme en toile.

**3.** Composite selon la revendication 2, **caractérisé en ce que** le moyen de liaison comprend une pluralité de points de chaînette constitués d'un deuxième fil résistant à la température (16).

**4.** Composite selon la revendication 2 ou 3, **caractérisé en ce que** la préforme en toile comprend de multiples couches (14) en toile de carbone.

**5.** Composite selon la revendication 4, **caractérisé en ce que** le matériau ablatif non fibreux, disposé dans la préforme, comprend en outre une résine contenant du carbone durcie.

**6.** Composite selon la revendication 5, **caractérisé en ce que** la résine contenant du carbone durcie comprend une résine phénolique.

**7.** Composite selon la revendication 4, **caractérisé en ce que** le matériau ablatif non fibreux, disposé dans la préforme, est du carbone.

**8.** Composite selon la revendication 3, **caractérisé en ce que** le deuxième fil résistant à la température (16) est un fil de carbone.

**9.** Composite selon la revendication 1, **caractérisé en ce que** le fil résistant à la température (18) est sélectionné dans le groupe constitué essentiellement d'un fil de carbone, d'un fil de quartz, d'un fil en nitrure de silicium et d'un fil de carbure de silicium.

**10.** Composite selon la revendication 1, **caractérisé en ce que** la couche isolante (26) comprend:

une résine durcie; et

des microbilles.

**11.** Composite selon la revendication 10, **caractérisé en ce que** la résine durcie est sélectionnée dans le groupe constitué essentiellement des résines phénoliques, phénoliques caoutchoutées, silicones, époxy et polyimides.

**12.** Composite selon la revendication 10 ou 11, **caractérisé en ce que** les microbilles sont sélectionnées dans le groupe constitué essentiellement de microbilles phénoliques, en carbone et en verre.

**13.** Composite selon la revendication 10, 11 ou 12, **caractérisé en ce qu'**il comprend en outre des fibres haute température.

**14.** Composite selon la revendication 13, **caractérisé en ce que** la fibre haute température est sélectionnée dans le groupe constitué essentiellement de fibres de carbone, de céramique et de silice.

**15.** Composite selon la revendication 1, de protection thermique contre toute ablation, **caractérisé en ce que**:

la couche ablative à haute densité (12) contient de multiples couches de toile de carbone (14), ladite toile contenant une résine phénolique durcie; lesdits points qui s'étendent à travers la couche ablative et forment des boucles de renforcement (24) à l'extérieur d'une surface interne (22) de la couche ablative (12) sont en fil de carbone; et

la couche isolante à faible densité (26) comprend une mousse phénolique caoutchoutée syntactique contenant des microbilles et des fibres haute température.

**16.** Composite selon la revendication 1, de protection thermique dans des conditions d'échange thermique, **caractérisé en ce que**:

la couche ablative à haute densité (12) contient de multiples couches de toile de quartz (14), ladite toile contenant une résine silicone durcie; lesdits points qui s'étendent à travers la couche ablative et forment des boucles de renforcement à l'extérieur d'une surface interne (22) de la couche ablative (12) sont en fil de quartz; et la couche isolante à faible densité (26) comprend une mousse en silicone syntactique contenant des microbilles et des fibres haute température.

**17.** Procédé de fabrication d'un composite couche ablative/couche isolante renforcé suivant trois dimensions, comprenant les étapes consistant à:

former une couche ablative à base de toile à haute densité (12);

coudre une pluralité de points (18) d'un fil résistant à la température à travers la couche ablative (12), les points formant des boucles de renforcement (24) qui s'étendent à l'extérieur d'une surface interne (22) de la couche ablative (12), former une couche isolante à base de résine à faible densité (26) sur ladite surface interne (22) de la couche ablative et noyer complètement lesdites boucles (24) dans ladite couche isolante à base de résine à faible densité (26), qui est liée à la surface interne (22) de la couche ablative (12), produisant ainsi un renforcement tridimensionnel de la liaison de ladite couche ablative (12) à ladite couche isolante (26).

FIG. 1

EP 0 877 893 B1